(19) Europäisches Patentamt / European Patent Office / Office européen des brevets

(11) **EP 3 152 675 B1**

(12) **FASCICULE DE BREVET EUROPEEN**

(45) Date de publication et mention de la délivrance du brevet:
**20.12.2023 Bulletin 2023/51**

(21) Numéro de dépôt: **15732833.7**

(22) Date de dépôt: **02.06.2015**

(51) Classification Internationale des Brevets (IPC):
**G06F 17/18** (2006.01)    **G08G 1/16** (2006.01)
**B60T 7/22** (2006.01)    **B60W 30/095** (2012.01)
**B60W 40/04** (2006.01)    **G01S 13/86** (2006.01)
**G01S 13/93** (2020.01)    **G01C 21/00** (2006.01)
**G01S 17/87** (2020.01)    **G01S 17/931** (2020.01)
**G06T 7/277** (2017.01)    **G06V 20/58** (2022.01)

(52) Classification Coopérative des Brevets (CPC):
**B60T 7/22; B60W 40/04; G01C 21/3807; G01C 21/3833; G01C 21/387; G01S 17/87; G01S 17/931; G06F 17/18; G06T 7/277; G06V 20/58; G08G 1/166;** B60T 2201/022; G06T 2207/10016

(86) Numéro de dépôt international:
**PCT/FR2015/051449**

(87) Numéro de publication internationale:
**WO 2015/185846 (10.12.2015 Gazette 2015/49)**

(54) **PROCÉDÉ D'ANALYSE D'UNE SCÈNE DYNAMIQUE, MODULE D'ANALYSE ET PROGRAMME D'ORDINATEUR ASSOCIÉS**

DYNAMISCHES SZENENANALYSEVERFAHREN UND ZUGEHÖRIGES ANALYSEMODUL UND COMPUTERPROGRAMM

DYNAMIC SCENE ANALYSIS METHOD, AND ASSOCIATED ANALYSIS MODULE AND COMPUTER PROGRAMME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.06.2014 FR 1455183**

(43) Date de publication de la demande:
**12.04.2017 Bulletin 2017/15**

(73) Titulaires:
• **INRIA - Institut National de Recherche en Informatique et en Automatique**
**78150 Le Chesnay (FR)**
• **Centre National de la Recherche Scientifique (CNRS)**
**75016 Paris (FR)**
• **Commissariat à l'Energie Atomique et aux Energies Alternatives**
**75015 Paris (FR)**

(72) Inventeurs:
• **LAUGIER, Christian**
**38330 Montbonnot Saint Martin (FR)**
• **NEGRE, Amaury**
**38190 Villard-Bonnot (FR)**
• **PERROLLAZ, Mathias**
**38000 Grenoble (FR)**
• **RUMMELHARD, Lukas**
**38000 Grenoble (FR)**

(74) Mandataire: **Vidon Brevets & Stratégie**
**16B, rue de Jouanet**
**BP 90333**
**35703 Rennes Cedex 7 (FR)**

(56) Documents cités:
**EP-A1- 2 289 754    WO-A1-2007/028932**
**FR-A1- 2 890 773**

- GINDELE T ET AL: "Bayesian Occupancy grid Filter for dynamic environments using prior map knowledge", INTELLIGENT VEHICLES SYMPOSIUM, 2009 IEEE, IEEE, PISCATAWAY, NJ, USA, 3 juin 2009 (2009-06-03), pages 669-676, XP031489920, ISBN: 978-1-4244-3503-6
- QADEER BAIG ET AL: "Using fast classification of static and dynamic environment for improving Bayesian occupancy filter (BOF) and tracking", CONTROL AUTOMATION ROBOTICS&VISION (ICARCV), 2012 12TH INTERNATIONAL CONFERENCE ON, IEEE, 5 décembre 2012 (2012-12-05), pages 656-661, XP032347217, DOI: 10.1109/ICARCV.2012.6485235 ISBN: 978-1-4673-1871-6
- CHRISTIAN LAUGIER ET AL: "Probabilistic Analysis of Dynamic Scenes and Collision Risks Assessment to Improve Driving Safety", IEEE INTELLIGENT TRANSPORTATION SYSTEMS MAGAZINE, vol. 3, no. 4, 2011, pages 4-19, XP055184312, ISSN: 1939-1390, DOI: 10.1109/MITS.2011.942779
- ELFES A: "Using occupancy grids for mobile robot perception and navigation", COMPUTER, IEEE, US, vol. 22, no. 6, juin 1989 (1989-06), pages 46-57, XP011436714, ISSN: 0018-9162, DOI: 10.1109/2.30720 cité dans la demande
- C. COUE ET AL: "Bayesian Occupancy Filtering for Multitarget Tracking: An Automotive Application", THE INTERNATIONAL JOURNAL OF ROBOTICS RESEARCH, vol. 25, no. 1, 2006, pages 19-30, XP055184349, ISSN: 0278-3649, DOI: 10.1177/0278364906061158
- NEGRE AMAURY ET AL: "Hybrid sampling Bayesian Occupancy Filter", 2014 IEEE INTELLIGENT VEHICLES SYMPOSIUM PROCEEDINGS, IEEE, 8 juin 2014 (2014-06-08), pages 1307-1312, XP032620279, DOI: 10.1109/IVS.2014.6856554

**Description**

La présente invention concerne un procédé d'analyse d'une scène dynamique observée à l'aide d'un bloc de capteur(s) comprenant une étape de définition d'une grille découpée en cellules et correspondant à la scène observée ; et la mise en oeuvre itérative par ordinateur des étapes :

- collecter au moins une nouvelle observation du bloc de capteur(s) à la k$^{ème}$ itération et déterminer, en fonction de la nouvelle observation collectée, une première probabilité d'occupation de chaque cellule de la grille modélisant le fonctionnement du bloc de capteur(s) ;
- déterminer, pour chaque cellule, à la k$^{ème}$ itération, une deuxième probabilité d'occupation de la cellule et un ensemble de probabilité(s) de mouvement du contenu de la cellule en fonction de la première probabilité d'occupation de la cellule déterminée à la k$^{ème}$ itération.

Selon les algorithmes de perception Bayésienne BOF (en anglais « Bayesian Occupancy Filter »), la scène observée est représentée par une grille d'occupation subdivisée en cellules et est analysée en termes de cellules occupées et de leur évolution dans le temps. Pour chaque cellule de cette grille d'occupation et à chaque itération de l'algorithme, une probabilité d'occupation de la cellule est calculée, ainsi qu'une distribution de probabilités de mouvement du contenu de la cellule. Cette distribution est représentée sous forme d'une grille de distribution de mouvement, encore nommé histogramme de transition de voisinage.

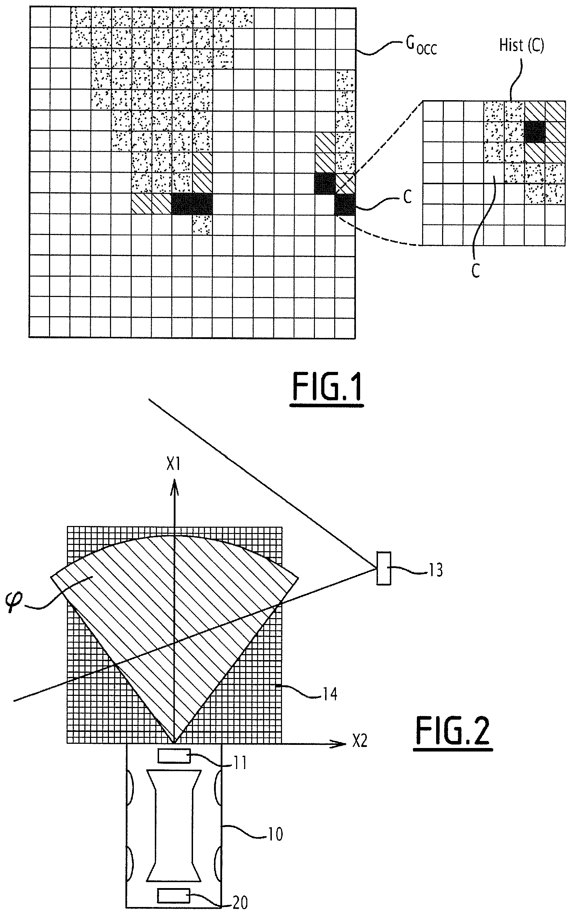

Sur la figure 1, une vue d'une grille d'occupation de l'environnement G$_{occ}$ est représentée, de 16 cellules sur 16 cellules. Dans cette représentation, plus les hachures couvrant une cellule sont rapprochées, plus la valeur de la probabilité d'occupation de la cellule est grande. Un histogramme de transition Hist(C) déterminé pour une cellule, référencée C, de la grille O$_{cc}$ est aussi représenté en figure 1. Chaque case de l'histogramme déterminé pour la cellule C représente, pour le pas de temps considéré, la transition de la cellule C vers ladite case ; à chaque case de l'histogramme est ainsi associé un vecteur vitesse de valeur distincte ; dans le cas présent, la cellule au centre de l'histogramme correspond à la transition de la cellule C vers elle-même.

Ces algorithmes ont l'avantage de fournir une analyse fiable et synthétique d'une scène dynamique, mais présentent un certain nombre de limitations.

Dans le cas d'une grille en mouvement, par exemple correspondant à l'environnement analysé depuis un véhicule en mouvement, des problèmes de crénelages (en anglais « aliasing ») spatio-temporels surgissent. En outre, il est nécessaire d'utiliser des grilles d'occupation et des histogrammes de mouvement à haute résolution pour détecter les mouvements lents et les petits objets, et aussi d'évaluer la vitesse d'objets très dynamiques (par exemple les autres véhicules en mouvement). Typiquement, si la norme de la vitesse maximale du véhicule est de V$_{max}$, la taille de la grille de distribution de mouvement maintenue au cours de l'algorithme doit permettre de représenter des vitesses de -2V$_{max}$ à + 2V$_{max}$ : chaque itération de l'algorithme implique donc d'estimer la probabilité de distribution des vitesses dans chaque case de cette grille pour chaque cellule. Le volume de calcul nécessaire est donc très important. Ce problème est crucial, notamment dans les cas d'une analyse embarquée dans un véhicule.

L'article au nom de Gindele T et al intitulé "Bayesian Occupancy grid Filter for dynamic environments using prior map knowledge", INTELLIGENT VEHICLES SYMPOSIUM, 2009, IEEE, PISCATAWAY, NJ, USA 3 Juin 2009, pages 669-676, ISBN : 978-1-4244-3503-6, décrit une forme d'extension du Bayesian Occupency Filter (BOF), qui est appelé BOFUM dans ce document. Selon cette extension, l'estimation des vitesses du BOF contient l'intégration de données a priori sur les vitesses à partir de cartes et de statistiques concernant la zone concernée. Cela revient à modifier la forme paramétrique de la distribution d'initialisation du BOF, mais n'en change pas la structure. L'article document au nom de Qadeer Baig et al intitulé "Using fast classification of static and dynamic environment for improving Bayesian occupancy filter(BOF) and tracking", CONTROL AUTOMATION ROBOTICS&VISION (ICARV). 2012, 12th International conférence on, IEEE 5 Décembre 2012, pages 656-661, ISBN :978-1-4673-1871-6, décrit une détection préalable des zones statiques dans la grille en utilisant un module dédié. Cette évaluation indépendante est ensuite utilisée pour conditionner la mise à jour des distributions dans le BOF, sous la forme d'un cache inhibant le calcul des vitesses dans les zones considérées statiques. L'invention est définie par les revendications indépendantes 1, 6 et 7.

A cet effet, suivant un premier aspect, l'invention propose un procédé d'analyse d'une scène dynamique observée à l'aide d'un bloc de capteur(s) du type précité, caractérisé en ce que la deuxième probabilité d'occupation de la cellule et de l'ensemble de probabilité(s) de mouvement du contenu de la cellule en fonction de la première probabilité d'occupation de la cellule déterminée à la k$^{ème}$ itération est déterminée par résolution de l'équation

$$P(OV|ZC) = \frac{\sum_{AO^{-1}V^{-1}} P\left(CAOO^{-1}VV^{-1}Z\right)}{\sum_{AOO^{-1}VV^{-1}} P\left(CAOO^{-1}VV^{-1}Z\right)}$$

où

C : identifiant de la cellule considérée ;

A : identifiant de de la cellule qui contenait, à la $(k-1)^{ème}$ itération ce que contient la cellule considérée à la $k^{ème}$ itération ;

O : état d'occupation de la cellule considérée, parmi les états « vide » et « occupé » ;

$O^{-1}$ : état d'occupation de la cellule A à la $(k-1)^{ème}$ itération ;

V : vitesse de la cellule C considérée ;

$V^{-1}$ : vitesse de la cellule A à la $(k-1)^{ème}$ itération ;

Z : observations des capteurs depuis la première itération jusqu'à la $k^{ème}$ itération ;

- la vitesse et la position respectives d'un ensemble de particules fictives dans la grille sont déterminées à la $k^{ème}$ itération en fonction des vitesses, positions des particules déterminées à la $(k-1)^{ème}$ itération et de la probabilité P(V|V-1) ;
- le procédé comprend une étape de détermination des particules localisées en chaque cellule en fonction des positions déterminées et en ce que la résolution de l'équation, pour une cellule, est scindée en la résolution d'une partie statique correspondant à P(O=vide, V=0|ZC) et P(O=occupé, V=0|ZC) et en la résolution d'une partie dynamique correspondant aux P(O=occ, $V = v_i^k$, |ZC), i = 1 à $n^k$, où $n^k$ est le nombre de particules déterminées dans la cellule C pour la $k^{ème}$ itération ;

la partie statique de la cellule C à la $k^{ème}$ itération étant déterminée en fonction de la partie statique de la cellule C déterminée à la $(k-1)^{ème}$ itération et de $P(O|O^{-1})$ ;

la probabilité de P(O=occupé, $V = v_i^k$, |ZC) de la partie dynamique de la cellule C étant déterminée à la $k^{ème}$ itération en fonction de la probabilité P(O=occupé, $V = v_i^{k-1}$, |ZA) calculée à la $(k-1)^{ème}$ itération pour la partie dynamique de la cellule A et de $P(O|O^{-1})$, où la particule $p_i$ déterminée dans la cellule C à la $k^{ème}$ itération avec une vitesse $v_i^k$ se trouvait dans la cellule A à la $(k-1)^{ème}$ itération avec une vitesse $v_i^{k-1}$.

Le procédé selon l'invention permet de diminuer nettement les ressources de calcul et mémoire nécessaires pour la détermination de l'occupation des cellules et des distributions de probabilités de mouvement lors des itérations.

Dans des modes de réalisation, le procédé d'analyse suivant l'invention comporte en outre une ou plusieurs des caractéristiques suivantes :

- à l'issue de la $k^{ème}$ itération, un ou des couples $(p_i, (v_i^k, x_i^k)))$, où $x_i^k$ est la position de la particule $p_i$ à la $k^{ème}$ itération, sont dupliqués au sein d'une cellule (C) ou supprimé de sorte que le nombre de couples par cellule soit fonction de la partie dynamique déterminée pour la cellule ;
- le procédé comporte une étape de sélection du couple à dupliquer/supprimer, la sélection dudit couple étant réalisée en fonction de la probabilité P(O=occupé, $V = v_i^k |ZC$) déterminée à la $k^{ème}$ itération, où $v_i^k$ est la composante de vitesse du couple ;
- le nombre total de particules dans la grille est constant au fil des itérations ; P(O=vide, V=0|ZC) déterminé à la $k^{ème}$ itération et noté $P^k$(O=vide, V=0|ZC), est déterminé en fonction du produit d'un premier terme fonction de la première probabilité d'occupation et d'un deuxième terme, ledit deuxième terme étant fonction de :

-

$$P^{k-1}(O=occ, V=0|ZC).(1-\varepsilon) + P^{k-1}(O=vide, V=0|ZC).\varepsilon,$$

et/ou

- coeff($v_i^k$). $P^{k-1}$(O=occupé, $V = v_i^{k-1}$,|ZA).(1-$\varepsilon$), où coeff($v_i^k$) est une fonction décroissante de $\left\| v_i^k \right\|$, et/ou
- une probabilité d'apparition $p_a$ d'un nouvel objet dans la scène observée.

Suivant un deuxième aspect, la présente invention propose un programme d'ordinateur à installer dans un module d'analyse d'une scène dynamique observée à l'aide d'un bloc de capteur(s) comprenant une étape de définition d'une grille découpée en cellules et correspondant à la scène observée, ledit programme comportant des instructions pour mettre en oeuvre les étapes d'un procédé suivant le premier aspect de l'invention lors d'une exécution du programme par des moyens de traitement du module d'analyse.

Suivant un troisième aspect, la présente invention propose un module d'analyse d'une scène dynamique observée à l'aide d'un bloc de capteur(s) comprenant une étape de définition d'une grille découpée en cellules et correspondant à la scène observée ; ledit dispositif étant adapté pour, sur la base d'une grille découpée en cellules et correspondant à la scène observée, mettre en oeuvre itérativement le traitement de :

- collecter au moins une nouvelle observation du bloc de capteur(s) à une $k^{\text{ème}}$ itération et déterminer, en fonction de la nouvelle observation collectée, une première probabilité d'occupation de chaque cellule de la grille et modélisant le fonctionnement du bloc de capteur(s) ;
- déterminer, pour chaque cellule, à la $k^{\text{ème}}$ itération, une deuxième probabilité d'occupation de la cellule et un ensemble de probabilité(s) de mouvement du contenu de la cellule en fonction de la première probabilité d'occupation de la cellule déterminée à la $k^{\text{ème}}$ itération, ledit module d'analyse étant caractérisé en ce qu'il est adapté pour déterminer ladite deuxième probabilité d'occupation de la cellule et l'ensemble de probabilité(s) de mouvement du contenu de la cellule en fonction de la première probabilité d'occupation de la cellule déterminée à la $k^{\text{ème}}$ itération par résolution de l'équation

$$P(OV|ZC) = \frac{\sum_{AO^{-1}V^{-1}} P\left(CAOO^{-1}VV^{-1}Z\right)}{\sum_{AOO^{-1}VV^{-1}} P\left(CAOO^{-1}VV^{-1}Z\right)}$$

où C : identifiant de la cellule considérée ;
A : identifiant de de la cellule qui contenait, à la $(k-1)^{\text{ème}}$ itération ce que contient la cellule considérée à la $k^{\text{ème}}$ itération ;
O : état d'occupation de la cellule considérée, parmi les états « vide » et « occupé » ;
$O^{-1}$ : état d'occupation de la cellule A à la $(k-1)^{\text{ème}}$ itération ;
V : vitesse de la cellule C considérée ;
$V^{-1}$ : vitesse de la cellule A à la $(k-1)^{\text{ème}}$ itération ;
Z : observations des capteurs depuis la première itération jusqu'à la $k^{\text{ème}}$ itération ;
ledit module étant adapté pour déterminer, à la $k^{\text{ème}}$ itération, la vitesse et la position respectives d'un ensemble de particules fictives dans la grille en fonction des vitesses, des positions des particules déterminées à la $(k-1)^{\text{ème}}$ itération et de la probabilité $P(V|V-1)$ ;
ledit module étant adapté pour déterminer des particules localisées en chaque cellule en fonction des positions déterminées et pour scinder la résolution de l'équation, pour une cellule, en la résolution d'une partie statique correspondant à $P(O=\text{vide}, V=0|ZC)$ et $P(O=\text{occupé}, V=0|ZC)$ et en la résolution d'une partie dynamique correspondant aux $P(O=\text{occ}, V=v_i^k, |ZC)$, i = 1 à $n^k$, où $n^k$ est le nombre de particules déterminées dans la cellule C pour la $k^{\text{ème}}$ itération ;
ledit module étant adapté pour déterminer la partie statique de la cellule C à la $k^{\text{ème}}$ itération en fonction de la partie statique de la cellule C déterminée à la $(k-1)^{\text{ème}}$ itération et de $P(O|O^{-1})$ ;
et pour déterminer la probabilité de $P(O=\text{occupé}, V=v_i^k, |ZC)$ de la partie dynamique de la cellule C à la $k^{\text{ème}}$ itération en fonction de la probabilité $P(O=\text{occupé}, V=v_i^{k-1}, |ZA)$ calculée à la $(k-1)^{\text{ème}}$ itération pour la partie dynamique de la cellule A et de $P(O|O^{-1})$, où la particule $p_i$ déterminée dans la cellule C à la $k^{\text{ème}}$ itération avec une vitesse $v_i^k$ se trouvait dans la cellule A à la $(k-1)^{\text{ème}}$ itération avec une vitesse $v_i^{k-1}$.

Ces caractéristiques et avantages de l'invention apparaîtront à la lecture de la description qui va suivre, donnée uniquement à titre d'exemple, et faite en référence aux dessins annexés, sur lesquels :

- la figure 1 représente une grille d'occupation et l'histogramme de transition d'une cellule de la grille ;
- la figure 2 représente une vue d'un véhicule et d'une grille couvrant une scène autour du véhicule dans un mode de réalisation de l'invention ;

- la figure 3 représente un dispositif d'analyse dans un mode de réalisation de l'invention ;
- la figure 4 représente un ensemble d'étapes mises en oeuvre dans un mode de réalisation de l'invention ;
- la figure 5 représente une grille d'occupation et la représentation des probabilités de mouvement associées à une cellule de la grille dans un mode de mise en oeuvre de l'invention.

Conformément à une convention usuelle du domaine des probabilités, si U,V,W, variables quelconques, P(U) désigne la probabilité d'obtenir U, et P(U|V) désigne la probabilité d'obtenir U, la valeur de V étant connue.

Par ailleurs, l'expression de la probabilité conjointe, qui permet l'estimation des fonctions de probabilité de combinaisons de variables, est la suivante :

$$P(W \mid U) = \frac{\sum_V P(UVW)}{\sum_{V,W} P(UVW)}$$

Un algorithme BOF estime, au cours d'itérations successives, et à l'aide d'une grille spatiale décomposée en cellules et représentant la scène analysée, l'occupation des cellules de la grille et le mouvement du contenu des cellules, à l'aide de probabilités fonction de variables aléatoires représentant les grandeurs à étudier, qui sont associées à chaque cellule et dont les évolutions au fil des itérations décrivent le déroulement de la scène observée (cf. notamment Pierre Bessière, Emmanuel Mazer, Juan Manuel Ahuactzin-Larios, et Kamel Mekhnacha, « Bayesian Programming », CRC Press, December 2013, ou MK Tay, Kamel Mekhnacha, Cheng Chen, and Manuel Yguel, « An efficient formulation of the bayesian occupation filter for target tracking in dynamic environments », International Journal of Vehicle Autonomous Systems), 6(1):155{171, 2008).

Les variables considérées dans le cas présent sont décrites ci-après :

- C : identifiant de la cellule considérée ;
- A : identifiant de l' « antécédent » : l'antécédent est la cellule qui contenait, à l'itération précédente, ce que contient la cellule considérée à l'itération courante ;
- O : occupation de la cellule considérée ; l'occupation prend un état parmi « vide » et « occupé » ;
- $O^{-1}$ : occupation de l'antécédent à l'itération précédente ;
- V : vitesse (vecteur de dimension 2) de la cellule considérée ;
- $V^{-1}$ : vitesse de l'antécédent à l'itération précédente
- Z : observations des capteurs depuis la première itération jusqu'à l'itération courante.

La probabilité conjointe est exprimée à l'aide de l'équation (1) ci-dessous :

$$P(C\ A\ O\ O^{-1}\ V\ V^{-1}\ Z) = P(A)\ P(O^{-1}\ V^{-1} \mid A)\ P(O\ V \mid O^{-1}\ V^{-1})\ P(C \mid A\ V)\ P(Z \mid O\ V\ C),$$

où :

- les probabilités P(A) représentent la distribution sur tous les antécédents possibles A; elle est, dans le mode de réalisation considéré, choisie uniforme, une cellule étant considérée comme atteignable depuis toutes les autres cellules de la grille avec une probabilité égale ;
- $P(O^{-1}\ V^{-1} \mid A)$ est la distribution jointe conditionnelle sur l'occupation et le mouvement des antécédents ; les probabilités correspondant à cette distribution sont calculées à l'itération précédant l'itération considérée ;
- $P(O\ V \mid O^{-1}\ V^{-1})$ est le modèle dynamique de prédiction ; le modèle choisi peut être décomposé comme le produit de deux termes : $P(O \mid O^{-1})P(V \mid V^{-1}O)$, où :

  - $P(O \mid O^{-1})$ est la distribution conditionnelle sur l'occupation de la cellule considérée, l'occupation de l'antécédent étant connue ; cette distribution est définie par la matrice de transition T, $T = \begin{bmatrix} 1-\varepsilon & \varepsilon \\ \varepsilon & 1-\varepsilon \end{bmatrix}$, qui autorise le changement d'état d'occupation d'une cellule avec une probabilité basse pour prendre en compte des erreurs d'évaluation et d'observation ;
  - $P(V \mid V^{-1}O)$ est la distribution conditionnelle sur la vitesse de l'itération courante, la vitesse à l'itération précédente étant connue ; usuellement elle suit une loi normale, centrée sur la vitesse à l'itération précédente pour représenter un modèle d'accélération gaussien ; cette distribution peut être adaptée pour correspondre à différents objets observés ; et comme il est considéré qu'une cellule vide ne peut pas bouger, une fonction de Dirac est ajoutée pour interdire un mouvement dans ce cas ;

- P(C | A V) est la distribution qui indique si la cellule C considérée est accessible depuis l'antécédent connu A = a et avec la vitesse connue V= v ; cette distribution est une fonction de Dirac avec une valeur égale à 1 si et seulement si a+v.dt ε C, où dt est le pas de temps séparant l'itération courante de l'itération précédente ;
- P(Z | O V C) est la distribution sur les valeurs d'observation du capteur, encore appelé « modèle capteur ».

Un algorithme BOF estime, au cours d'itérations successive, l'occupation des cellules et la vitesse du contenu des cellules en fonction d'observations courantes fournies par le(s) capteur(s) pour chaque cellule, par la détermination de P(OV|ZC).

Par discrétisation des cellules-antécédents et des vitesses, P(OV|ZC) peut s'écrire à l'aide de l'équation (2) suivante :

$$P(OV|ZC) = \frac{\sum_{A O^{-1} V^{-1}} P\left(C A O O^{-1} V V^{-1} Z\right)}{\sum_{A O O^{-1} V V^{-1}} P\left(C A O O^{-1} V V^{-1} Z\right)}$$

Sur la figure 2, un véhicule 10 est représenté en vue de dessus. Le véhicule 10, outre les moyens usuels de locomotion propres aux véhicules, comporte un bloc capteur 11 et un dispositif d'analyse 20 dans un mode de mise en oeuvre de l'invention.

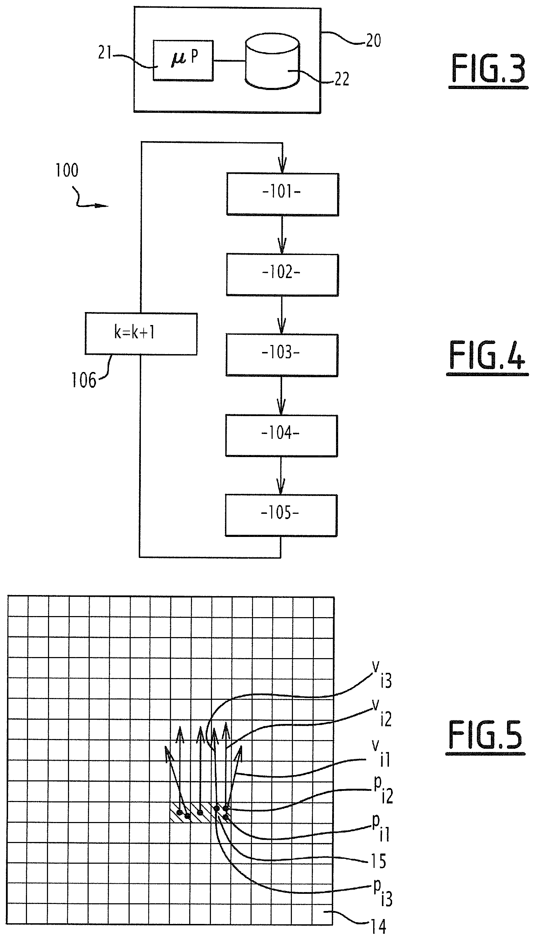

Comme représenté schématiquement en figure 3, le dispositif d'analyse 20, appelé aussi module HSBOF (pour « Hybrid Sampling BOF ») comporte un microprocesseur 21 et une mémoire 22. La mémoire 22 comporte des instructions logicielles, qui lorsqu'elles sont exécutés par le microprocesseur 21, mettent en oeuvre les étapes indiquées ci-dessous et réalisées par le dispositif d'analyse 20. Dans le cas considéré, le dispositif d'analyse 20 comporte en outre un accélérateur de calcul parallèle adapté pour traiter en parallèle des opérations mises en oeuvre dans le procédé détaillé ci-dessous.

Le bloc capteur 11 est adapté d'une part pour estimer les déplacements du véhicule 10, sous la forme de translations et rotations. Ces estimations de déplacement sont fournies au dispositif d'analyse 20.

Le bloc capteur 11 comprend en outre un capteur embarqué (ou plusieurs capteurs embarqués) permettant d'effectuer des mesures et, en fonction de ces mesures, de détecter la présence de zones occupées par exemple assimilées selon certains critères à des obstacles dans l'environnement du véhicule 10 et leurs positions par rapport à un référentiel (X1, X2) lié au véhicule (on notera que dans d'autres modes de réalisation, une carte instantanée de profondeur est déterminée en fonction de ces mesures).

Un tel capteur comprend par exemple un télémètre laser dotée d'une source émettant un faisceau laser et qui effectue un balayage d'une surface φ dans le plan (X1, X2), et/ou une caméra stéréo, etc. et détecte la présence d'obstacle(s) dans la scène balayée, et leur position en fonction de l'analyse de faisceaux réfléchis reçus par le télémètre.

Ces données d'observation de la scène comportant la position d'obstacles détectés sont fournies par le capteur 11 au dispositif d'analyse 20.

Dans des modes de réalisation, des données d'observations de la scène indiquant la présence d'obstacle(s) dans la scène balayée, et leur position, sont fournies au dispositif d'analyse 20 par un ou des capteurs extérieurs 13 au véhicule 10, par exemple un capteur fixé sur le bord de la route sur laquelle le véhicule 10 circule.

On considère par ailleurs une grille spatiale 14 correspondant à une portion de l'environnement du véhicule 10, par exemple une vue de dessus d'une zone de largeur et longueur fixées dans le plan (X1, X2), par exemple de 20 mètres chacune, qui s'étend par exemple depuis le véhicule vers l'avant en direction de l'axe longitudinal X1 du véhicule. Cette grille 14 est découpée en cellules C, par exemple 100 000 cellules, de manière à constituer une grille spatiale représentant une vue de dessus de l'environnement du véhicule.

Le dispositif d'analyse 20 est adapté pour déduire, à chaque instant $t_k = t_0 + k.dt$, de ces données d'observation de l'environnement du véhicule reçues du ou des capteurs 11, la distribution sur les valeurs d'observations reçues, encore appelé « modèle probabiliste capteur » : P(Z | O V C).

Ainsi soit $z^k$ les observations de l'environnement du bloc capteur 11 à considérer pour l'instant $t^k$. La probabilité P(Z | O V C) déterminée à l'instant $t_k$ pour chaque cellule C de la grille 14 par le module d'analyse 20 en fonction des observations $z^1$ à $z^k$ reçues aux instants d'itération $t_1$ à $t_k$ modélise le comportement du capteur 11 et prend en compte le bruitage de la mesure par le bloc capteur 11, les facteurs d'imprécision tels que la température, l'éclairage, les couleurs des objets, les masquages d'objets, la capacité du capteur à détecter ou non les objets et à détecter des objets quand il n'y en a pas (« fausses détections »). On notera que l'observation Z ne prend pas dans le cas considéré la forme des coordonnées des objets détectés dans le référentiel lié au véhicule et d'axes X1, X2, mais prend la valeur 1 dans une cellule C ou un obstacle a été détecté et 0 ailleurs. Le modèle probabiliste capteur est selon les cas estimé à partir d'une modélisation des caractéristiques physiques du capteur et des objets à détecter, ou « appris » expérimentalement.

Des exemples de modèles de capteurs sont par exemple décrits dans FR 0552736 ou encore à l'adresse http://ieeexplore.ieee.org/stamp/stamp.jsp?tp=&arnumber= 30720&tag=1 .

Dans le cas présent, en considérant que le module d'analyse 20 collecte à un instant $t_k$ des données d'observation actualisées fournies par m capteurs, chacun fournissant des observations $z^j$ ,j = 1 à m, le vecteur observation $z_k$ = ($z^1$, $z^2$, .., $z^m$). Typiquement, un laser donne une observation correspondant à une liste de valeurs de distance d'impact pour différentes directions. Le module d'analyse 20 obtient à chaque instant $t_k$ un vecteur d'observations actualisé $z_k$. A partir de ces vecteurs instantanés, le dispositif d'analyse 20 déduit de $z_k$ et du "modèle de capteur" (en l'occurence ici multicapteur) la probabilité P( Z = $z_k$ | O V C), ce qui donne une grille instantanée (indiquant pour chaque C, si la case était occupée, et avec telle vitesse, quelle serait la probabilité d'avoir ces observations) qui est fournie ensuite comme donnée d'entrée de l'étape 103 détaillée plus bas et dans laquelle les probabilités P( O V | $z^1$...$z^k$ C) sont calculées récursivement en utilisant les évaluations P( O V | $z^1$...$z^{k-1}$ C) calculées à $t_{k-1}$. L'invention repose sur les principes suivants :

- décomposition de chaque cellule en une partie statique correspondant à la partie non occupée de la cellule et à la partie de la cellule occupée par des objets de vitesse nulle, et en une partie dynamique correspondant à la partie de la cellule occupée par des objets en mouvement ;
- représenter la distribution de mouvement d'une cellule de la grille d'occupation par un ensemble de particules représentant la partie dynamique de la cellule, à la place d'une grille régulière de distribution de mouvement, ce qui permet une représentation plus compacte.

Ainsi la détermination de P(OV|ZC) revient à calculer la probabilité associée à chaque particule P(O=occ, V=$v_k$ | ZC) et les probabilités associées au domaine statique P(O=occ, V=0 | ZC) et P(O=vide, V=0 | ZC).

En utilisant la décomposition (1) et en considérant le dénominateur de l'équation (2) comme un facteur d'échelle, cette équation (2) peut être réécrite de la manière suivante :

$$P(OV|ZC) \propto P(Z|OC) \left[ \sum_{AO^{-1}V^{-1}} P(A)P(O^{-1}V^{-1}|A)P(O|O^{-1})P(V|OV^{-1})P(C|AV) \right] \qquad (3)$$

où le sigle « $\propto$ » signifie « est proportionnel à ».

$$\text{On note } \alpha(o,v) = \left[ \sum_{AO^{-1}V^{-1}} P(A)P(O^{-1}V^{-1}|A)P(o|O^{-1})P(v|oV^{-1})P(C|Av) \right] \qquad (4)$$

où o a pour valeur l'état d'occupation « occupé » (nommé « occ ») ou « vide », et v est une vitesse.

**Procédé 100**

Un ensemble 100 d'étapes 101-106 mises en oeuvre dans une $k^{ème}$ itération à l'instant $t_k=t_0+k.dt$, par le dispositif d'analyse 20 est décrit ci-après en référence à la figure 4 dans un mode de réalisation de l'invention (k≥1).

Il est considéré qu'à l'issue de l'itération précédente, i.e. (k-1)$^{ème}$ itération, pour chaque cellule C de la grille, il a été obtenu les probabilités associées au domaine statique :

- P(O=occ, V=0 | ZC), nommé $P^{k-1}$(O=occ, V=0 | ZC),
- P(O=vide, V=0 | ZC), , nommé $P^{k-1}$(O=vide, V=0 | ZC), et

qu'un ensemble de particules a été attribué à la cellule C, tel que chaque particule dans cet ensemble a une vitesse respective $v_i^{k-1}$ et une position respective $x_i^{k-1}$ et qu'il a été obtenu les probabilités associées au domaine dynamique P(O=occ, $V=v_i^{k-1} | ZC$ ), nommé $P^{k-1}$(O=occ, $V=v_i^{k-1} | ZC$ ).

Dans le mode de réalisation considéré, la position $x_i^{k-1}$ permet de positionner exactement les particules au sein de la cellule. L'introduction de positions précises des particules au sein d'une cellule permet de résoudre des problèmes de crénelage spatio-temporel.

Dans une étape 101 de détermination de la propagation des particules, pour chaque particule, le modèle de mouvement est appliqué, conformément à la distribution $P(V|V^{-1})$ :

$$v_i^{k'} = v_i^{k-1} + \sigma$$

$$x_i^{k'} = x_i^{k-1} + \mathrm{dt}.\ v_i^{k'}$$

où $\sigma$ est un bruit gaussien centré en 0 de covariance $\Sigma$.

Dans une étape 102, le déplacement de la grille correspondant à un déplacement du véhicule 10 le cas échéant est pris en compte, en fonction de la rotation $R^k$ et de la translation $T^k$ effectuées entre l'itération (k-1) et l'itération courante k et déterminées ar le bloc capteur 11 ::

$$v_i^k = R^k\ .\ v_i^{k'}$$

$$x_i^k = R^k\ .\ x_i^{k'}\ +\ T^k$$

Dans une étape 103, les observations $z^k$ de la scène à considérer pour l'instant $t_k$ sont collectées (sous-étape 103_0) et les probabilités $P(Z|O, V, C)$ issues de ces observations $z^k$ et modélisant le capteur, comme décrit plus haut, sont déduites de ces observations.

Puis les probabilités d'occupation et de mouvement prenant en compte ces observations collectées sont mises à jour (sous-étapes 103_1 à 103_3 détaillées ci-après).

La partie statique de chaque cellule C est mise à jour, dans la sous-étape 103_1, en utilisant la part statique de la cellule considérée C déterminée à l'issue de la (k-1)$^{\text{ème}}$ itération, i.e. $P^{k-1}$ (*occ*, 0|Z,C) et $P^{k-1}$ (*vide*, 0|Z,C).

En effet, $P(O^{-1} = occ, V^{-1} = 0 | Z, A = C) = P^{k-1}$ (*occ*, 0 |Z,C), et

$P(O^{-1} = vide, V^{-1} = 0 | Z, A = C) = P^{k-1}$ (*vide*, 0 |Z, C).

Il découle que les coefficients $\alpha$(occ,0) et $\alpha$(vide,0) d'après la définition donnée à l'équation (4) sont obtenus pour la cellule C considérée par le calcul suivant :

$$\alpha(\text{occ,0}) = P^{k-1}(occ, 0 | Z, C)\ .(1\text{-}\varepsilon) + P^{k-1}(vide, 0 | Z, C)\ .\varepsilon$$

$$\alpha(\text{vide,0}) = P^{k-1}(occ, 0 | Z, C)\ .\varepsilon + P^{k-1}(vide, 0 | Z, C)\ .(1\text{-}\varepsilon),$$

où

$$\text{où } \varepsilon = P(O = occ | O^{-1} = vide) = P(O = vide | O^{-1} = occ\ ).$$

La partie dynamique des cellules est à son tour mise à jour, en considérant les particules. Ainsi, pour chaque cellule C de la grille, dans une étape 103_2 :

- on détermine quelles sont les particules, parmi les ensembles de particules associées aux cellules, qui se retrouvent dans la cellule C après la mise en oeuvre des étapes 101 et 102. Considérons que $n_C^k$ particules se retrouvent dans la cellule C considérée. Chacune de ces particules a une vitesse respective $v_i^k$ et une position courante $x_i^k$ au sein de la cellule C et était dans une cellule, nommée $a_i$ à l'itération k-1, telle que déterminées à l'issue de l'étape 102 ; et on définit le coefficient de pondération associé $w_i^{k-1}$ à cette particule : $w_i^{k-1} = P(O^{-1} = occ,\ V^{-1} = v_i^{k-1}\ |\ A = a_i,\ z^1,...,\ z^{k-1})$ qui est égal à $P^{k-1}(O=occ,\ V = v_i^{k-1}\ |\ Z,\ a_i^{'})$, déterminé à l'itération k-1 (sous-étape 103_3) relativement à la cellule $a_i$ :

- le coefficient $\alpha(occ,\ v_i^k)$ d'après la définition donnée à l'équation (4) est alors déterminé pour la cellule C considérée comme égal à : $\alpha(occ,\ v_i^k) = w_i^{k-1} \cdot (1 - \varepsilon)$ ; une cellule vide est supposée de vitesse nulle : $\alpha(vide,\ v_i^k) = 0$.

Dans une sous-étape 103_3 de mise à jour des probabilités, pour chaque cellule C, pour terminer la résolution de l'équation (3), on calcule $\beta(occ,0)$, $\beta(vide,0)$ et $\beta(occ,\ v_i^k)$ de la façon suivante, à l'aide des probabilités d'observation actualisées $P(Z\,|O,\ V,\ C)$ issues de la sous-étape 103_0 et des coefficients $\alpha(occ,0)$, $\alpha(vide,0)$ et $\alpha(occ,\ v_i^k)$ calculées lors des sous-étapes 103_1 et 103_2 :

$\beta(occ,0) = P(Z|\ occ\ ,\ 0,\ C).\alpha(occ,0)$
$\beta(vide,0) = P(Z|\ vide\ ,\ 0,\ C).\alpha(vide,0)$
$\beta(occ,\ v_i^k) = P(Z\ |\ occ\ ,\ v_i^k,\ C).\alpha(occ,v_i^k)$.

Le dénominateur de l'équation (2), nommé facteur d'échelle « d », est calculé : $d = \beta(occ,0) + \beta(vide,0) + \Sigma_i\ \beta(occ,\ v_i^k)$, où $\Sigma_i\ \beta(occ,\ v_i^k)$ est la somme des coefficients $\beta(occ,\ v_i^k)$ calculés pour les particules se trouvant dans la cellule C.

Finalement, on obtient pour la cellule C les probabilités suivantes qui représentent l"occupation de filtrage bayésien et les probabilités de mouvement associés :

$$P^k(occ,\ 0\,|\,Z,C) = \frac{\beta(occ,0)}{d} \quad \text{pour la vitesse nulle,}$$

$$P^k(occ,\ v_i^k\ |\,Z,C) = \frac{\beta(occ,v_i^k)}{d} \quad \text{pour chaque vitesse } v_i^k\text{, les vitesses } v_i^k \text{ étant les vitesses des particules déterminées dans la cellule C,}$$

$$P^k(vide,\ 0\,|\,Z,C) = \frac{\beta(vide,0)}{d} \quad \text{pour la vitesse nulle.}$$

Une étape 104 (optionnelle) de réorganisation des particules est ensuite mise en oeuvre pour adapter le nombre de particules par cellule et par exemple dupliquer les particules à haute probabilité, ceci afin de permettre une meilleure efficacité de l'ensemble d'étapes 100, en mettant en oeuvre le processus Proc_reorg indiqué ci-dessous. On notera que la précision de la représentation de la distribution de vitesse dans une cellule croît avec le nombre de particules dans la cellule.

Dans le mode de réalisation considéré, le nombre total de particules, nommé nbPart, est maintenu constant au fil des itérations (la charge de calcul est ainsi la même pour chaque itération, la mémoire à allouer est constante et connue). Ce nombre total peut évoluer dans d'autres modes de réalisation (par exemple, le nombre total pourrait être augmenté pour une scène très dynamique et être diminué pour une scène plus statique).

On considère pour chaque cellule C l'ensemble pondéré des $n_C^k$ particules défini par les $n_C^k$ triplets $\{x_i^k, v_i^k,\ w_i^k\}$ associés chacun à une particule, où $w_i^k = P^k(O=occ,\ V = v_i^k\ |\ Z,\ C)$.

Selon le processus Proc_reorg, on réitère un nombre égal à nbPart l'ensemble d'étapes successives suivantes i, ii et iii, après avoir initialisé à un ensemble vide, par cellule de la grille, un nouvel ensemble de particules attribué à la cellule :

il tirer un identifiant de cellule selon une loi d'occurrence proportionnelle au poids de la cellule (le poids d'une cellule C est égal à la somme des $n_C^k$ poids $w_i^k$ des particules dans la cellule et représente donc $P^k(O=occ, V\neq 0| Z, C)$) ;

ii/ sélectionner aléatoirement une particule parmi les $n_C^k$ particules de cette cellule, selon une loi d'occurrence proportionnelle au poids $w_i^k$ de la particule ;

iii/ ajouter la particule sélectionnée en ii/ au nouvel ensemble de particules attribué à la cellule dont l'identifiant a été tiré en i/.

Une fois ces étapes réitérées, le poids des particules est normalisé par cellule, i.e. le poids de chaque particule dans le nouvel ensemble de particules attribué à la cellule est divisé par la somme des poids des particules dans ce nouvel ensemble ; ce sont ces poids normalisés qui sont considérés comme les poids $w_i^k$ pour l'itération suivante.

Dans une étape 106, la valeur de k est augmentée de 1.

Lorsqu'un nouvel objet apparaît sur la grille, il est nécessaire d'initialiser une ou des particules correspondante(s) avec une distribution de vitesse.

Pour cela, dans un mode de réalisation, une probabilité d'apparition constante avec une distribution uniforme entre les états occupé/vide et entre statique/dynamique est ajoutée. Par exemple, dans l'étape 103_1, on calcule $\alpha(occ,0)$, respectivement $\alpha(vide,0)$, en ajoutant $p_a/4$, respectivement $p_a/2$, soit

$$\alpha(occ,0) = P^{k-1}(occ, 0\,|\,Z,C)\,.(1\text{-}\varepsilon) + P^{k-1}(vide, 0\,|\,Z,C)\,.\varepsilon + p_a/4$$

$$\alpha(vide,0) = P^{k-1}(occ, 0\,|\,Z,C)\,.\varepsilon + P^{k-1}(vide, 0\,|\,Z,C)\,.(1\text{-}\varepsilon) + p_a/2 \ ;$$

et dans l'étape 103_2, on considère pour la cellule un terme dynamique supplémentaire $\alpha(occ, V = «\text{ inconnue »}) = p_a/4$. Ainsi dans l'étape 104 de réorganisation des particules, quand la vitesse « inconnue » est sélectionnée (étape ii/), la vitesse est déterminée à partir d'une distribution uniforme, en sélectionnant uniformément une vitesse sur $[-V_{max}, +V_{max}]\times[-V_{max}, +V_{max}]$ et en l'associant à la cellule.

Dans un mode de réalisation qui peut se combiner ou non avec le précédent, pour empêcher des particules de suivre un objet statique, chaque particule contribue à la part statique représentée par $\alpha(occ,0)$ calculé à l'étape 103_1, par un coefficient de valeur décroissant avec la norme de vitesse :

$$\alpha(occ,0) = P^{k-1}(occ, 0\,|\,Z,C)\,.(1\text{-}\varepsilon) + P^{k-1}(vide, 0\,|\,Z,C)\,.\varepsilon + \sum_{i=1\,\grave{a}\,n_C^k} e^{\frac{-\|v_i^k\|^2}{2\sigma_s^2}}.w_i^{k-1}.(1-\varepsilon) \ ;$$

et à l'étape 103_2 : $\alpha(occ, v_i^k) = (1 - e^{\frac{-\|v_i^k\|^2}{2\sigma_s^2}})\ .\ w_i^{k-1}.(1-\varepsilon)$, où $\sigma_s$ est un coefficent constant représentant la contribution de vitesse statique (pour $\|v_i^k\| > 3 < \sigma_s$, la contribution statique est insignifiante).

Dans une étape d'initialisation préalable à la première itération (k=1) de l'ensemble d'étape 100, il est procédé, dans un mode de réalisation, comme pour les antécédents de type "inconnu" : tirage uniforme de la vitesse sur $[- V_{max}, V_{max}] \times [- V_{max}, V_{max}]$. La position est prise en tirant uniformément sur la grille (tirage d'une position flottante sur [-gridWidth/2, gridWidth/2] x [-gridHeight/2, gridHeight/2], où gridWidth est la largeur de la grille et gridHeight est la hauteur de la grille), l'occupation est fixée à 0,5 (inconnue). Les $w_i^0$ sont égaux à $1 / n_C^0$, ce nombre $n_C^0$ de particules dans la cellule C étant un résultat du tirage aléatoire précédent. La probabilité statique initiale est un paramètre sans grand impact, car la réévaluation a lieu très rapidement.

Ainsi selon l'invention, la représentation classique BOF comprenant une grille d'occupation et associant à chaque cellule de la grille un histogramme de vitesse est remplacée par une grille d'occupation avec, pour chaque cellule, une probabilité d'occupation, un coefficient statique correspondant à une probabilité de vitesse nulle, un ensemble de particules dans la cellule, ayant chacune une vitesse respective $v_i$ et un ensemble de probabilités $P(V = v_i)$.

L'invention permet de construire à chaque itération, via la grille, une carte probabiliste discrète de la scène, en distinguant les composantes statiques et dynamiques. Le mouvement des composantes dynamiques est estimé à l'aide des particules.

La qualité des estimations d'occupation et de vitesse est améliorée, par une meilleure précision des vitesses calculées et une diminution des effets de crénelage spatio-temporel.

A titre d'illustration, la grille d'occupation 14 obtenue dans un mode de réalisation de l'invention est représentée. La cellule 15 de la grille d'occupation 14 comporte par exemple 3 particules $p_{ij}$, à des positions respectives dans la cellule, ayant des vitesses respectives $v_{ij}$, j = 1 à 3.

Les observations et estimations de déplacement du véhicule sont effectuées par les capteurs et fournies au dispositif d'analyse 20, puis traitées en temps réel par le dispositif d'analyse 20. Par exemple le pas d'itération dt est égal à 0,06 seconde., les observations de rafraîchissement de la grille et estimations de déplacement étant fournies au dispositif d'analyse 20 selon des pas de temps de durée inférieurs ou égaux à dt.

Les valeurs d'occupations et de vitesses associées aux particules déterminés pour chaque cellule à chaque itération peuvent, dans des modes de réalisation de l'invention, être exploitées de différentes manières dans une étape 105 :

- action/décision courante en fonction des valeurs d'occupations et de champs de vitesse déterminés pour chaque cellule (par
- prédiction d'état(s) futur(s) de l'environnement (par exemple évaluation de risques de collisions entre le véhicule 10 et des objets correspondant à des cellules dont la probabilité d'occupation est supérieure à un seuil d'occupation donné et la distance observée est au-dessous d'un seuil de distance donné), puis par exemple action/décision courante en fonction d'un ou des états futurs déterminés (freinage automatique du véhicule 10 par exemple) ; on notera que les distributions de vitesses inférées par l'invention sont directement utilisables pour prédire l'évolution de la scène, et donc déduire l'intersection entre le véhicule et des obstacles, y compris les objets dynamiques.

Les étapes du procédé 100 sont aisément parallélisables.

La détermination de la grille d'occupation et des champs de vitesse est réalisable pour un environnement analysé comportant toute sorte d'objets préalablement connus ou non à l'aide de capteurs même hétérogènes, grâce à l'utilisation de modèles de capteur probabilistes.

La présente invention permet de diminuer nettement les ressources en calcul et mémoire nécessaires pour la détermination de l'occupation des cellules et des distributions de probabilités de mouvement. Elle permet d'atteindre gain d'un facteur 100.

Elle permet de compenser le mouvement propre des capteurs (calculer les opérations de rotation/translation des grilles et des particules sur les champs de vitesses lorsqu'ils étaient considérés sous forme d'histogrammes BOF était en pratique impossible du fait d'un crénelage trop important et d'une interpolation 4D trop coûteuse en calculs).

La qualité des résultats est améliorée par la diminution des effets de crénelage spatio-temporels et par une détermination plus précise des vitesses.

**Revendications**

1.  Procédé d'analyse d'une scène dynamique observée à l'aide d'un bloc (11) de capteur(s) pour la détection d'un obstacle dans l'environnement d'un véhicule comprenant une étape de définition d'une grille (14) découpée en cellules (C) et correspondant à la scène observée ;

    et la mise en oeuvre itérative par ordinateur des étapes :

    - collecter au moins une nouvelle observation du bloc de capteur(s) à la k<sup>ème</sup> itération et déterminer, en fonction de la nouvelle observation collectée, une première probabilité d'occupation de chaque cellule de la grille modélisant le fonctionnement du bloc de capteur(s), ladite première probabilité étant déterminée en utilisant un modèle probabiliste du bloc de capteur(s) estimé à partir d'une modélisation des caractéristiques physiques du bloc de capteur(s) et des obstacles à détecter, ou appris expérimentalement ;
    - déterminer, pour chaque cellule, à la k<sup>ème</sup> itération, une deuxième probabilité d'occupation de la cellule et un ensemble de probabilité(s) de mouvement du contenu de la cellule en fonction de la première probabilité d'occupation de la cellule déterminée à la k$^{ème}$ itération,

ledit procédé étant **caractérisé en ce que** la deuxième probabilité d'occupation de la cellule et de l'ensemble de probabilité(s) de mouvement du contenu de la cellule en fonction de la première probabilité d'occupation de la cellule déterminée à la k$^{ème}$ itération est déterminée par résolution de l'équation

$$P(OV|ZC) = \frac{\Sigma_{AO^{-1}V^{-1}} P(CAOO^{-1}VV^{-1}Z)}{\Sigma_{AOO^{-1}VV^{-1}} P(CAOO^{-1}VV^{-1}Z)}$$

où C : identifiant de la cellule considérée ;
A : identifiant de de la cellule qui contenait, à la (k-1)$^{ème}$ itération ce que contient la cellule considérée à la k$^{ème}$ itération ;
O : état d'occupation de la cellule considérée, parmi les états « vide » et « occupé », l'état « occupé » indiquant qu'une cellule contient un obstacle ;
O$^{-1}$ : état d'occupation de la cellule A à la (k-1)$^{ème}$ itération ;
V : vitesse de la cellule C considérée ;
V$^{-1}$ : vitesse de la cellule A à la (k-1)$^{ème}$ itération ;
Z : observations des capteurs depuis la première itération jusqu'à la k$^{ème}$ itération ;

- la vitesse et la position respectives d'un ensemble de particules fictives dans la grille sont déterminées à la k$^{ème}$ itération en fonction des vitesses, positions des particules déterminées à la (k-1)$^{ème}$ itération et de la probabilité P(V|V-1) ;
- le procédé comprend une étape de détermination des particules localisées en chaque cellule en fonction des positions déterminées et **en ce que** la résolution de l'équation, pour une cellule, est scindée en la résolution d'une partie statique correspondant à P(O=vide, V=0|ZC) et P(O=occupé, V=0|ZC) et en la résolution d'une partie dynamique correspondant aux P(O=occ, $V = v_i^k$ ,|ZC), i = 1 à n$^k$, où n$^k$ est le nombre de particules déterminées dans la cellule C pour la k$^{ème}$ itération ;

la partie statique de la cellule C à la k$^{ème}$ itération étant déterminée en fonction de la partie statique de la cellule C déterminée à la (k-1)$^{ème}$ itération et de P(O|O$^{-1}$) ;

la probabilité de P(O=occupé, $V = v_i^k$ ,|ZC) de la partie dynamique de la cellule C étant déterminée à la k$^{ème}$ itération en fonction de la probabilité P(O=occupé, $V = v_i^{k-1}$ ,|ZA) calculée à la (k-1)$^{ème}$ itération pour la partie dynamique de la cellule A et de P(O|O$^{-1}$), où la particule p$_i$ déterminée dans la cellule C à la k$^{ème}$ itération avec une vitesse $v_i^k$ se trouvait dans la cellule A à la (k-1)$^{ème}$ itération avec une vitesse $v_i^{k-1}$ .

2. Procédé selon la revendication 1, selon lequel à l'issue de la k$^{ème}$ itération, un ou des couples (p$_i$, ( $v_i^k$ , $x_i^k$ )), où $x_i^k$ est la position de la particule p$_i$ à la k$^{ème}$ itération, sont dupliqués au sein d'une cellule (C) ou supprimé de sorte que le nombre de couples par cellule soit fonction de la partie dynamique déterminée pour la cellule.

3. Procédé selon la revendication 2, comportant une étape de sélection du couple à dupliquer/supprimer, la sélection dudit couple étant réalisée en fonction de la probabilité P(O=occupé, $V = v_i^k$ |ZC ) déterminée à la k$^{ème}$ itération, où $v_i^k$ est la composante de vitesse du couple.

4. Procédé selon la revendication 2 ou 3, selon lequel le nombre total de particules dans la grille (14) est constant au fil des itérations.

**5.** Procédé selon l'une des revendications précédentes, selon lequel P(O=vide, V=0|ZC) déterminé à la k$^{\text{ème}}$ itération et noté P$^k$(O=vide, V=0|ZC), est déterminé en fonction du produit d'un premier terme fonction de la première probabilité d'occupation et d'un deuxième terme, ledit deuxième terme étant fonction de :

-

$$P^{k-1}(O=occ, V=0|ZC).(1-\varepsilon) + P^{k-1}(O=vide, V=0|ZC).\varepsilon,$$

et/ou

- coeff ($v_i^k$). P$^{k-1}$(O=occupé, V= $v_i^{k-1}$, |ZA).(1- $\varepsilon$), où coeff ($v_i^k$) est une fonction décroissante de $\left\| v_i^k \right\|$, et/ou
- une probabilité d'apparition p$_a$ d'un nouvel objet dans la scène observée.

**6.** Programme d'ordinateur à installer dans un module d'analyse (20) d'une scène dynamique observée à l'aide d'un bloc (11) de capteur(s) comprenant une étape de définition d'une grille (14) découpée en cellules (C) et correspondant à la scène observée, ledit programme comportant des instructions pour mettre en oeuvre les étapes d'un procédé selon l'une des revendications 1 à 5 lors d'une exécution du programme par des moyens de traitement du module d'analyse.

**7.** Module d'analyse (20) d'une scène dynamique observée à l'aide d'un bloc (11) de capteur(s) pour la détection d'un obstacle dans l'environnement d'un véhicule comprenant une étape de définition d'une grille (14) découpée en cellules (C) et correspondant à la scène observée ; ledit dispositif étant adapté pour, sur la base d'une grille (14) découpée en cellules (C) et correspondant à la scène observée, mettre en oeuvre itérativement le traitement de :

- collecter au moins une nouvelle observation du bloc de capteur(s) à une k$^{\text{ème}}$ itération et déterminer, en fonction de la nouvelle observation collectée, une première probabilité d'occupation de chaque cellule de la grille et modélisant le fonctionnement du bloc de capteur(s), ladite première probabilité étant déterminée en utilisant un modèle probabiliste du bloc de capteur(s) estimé à partir d'une modélisation des caractéristiques physiques du bloc de capteur(s) et des obstacles à détecter, ou appris expérimentalement ;
- déterminer, pour chaque cellule, à la k$^{\text{ème}}$ itération, une deuxième probabilité d'occupation de la cellule et un ensemble de probabilité(s) de mouvement du contenu de la cellule en fonction de la première probabilité d'occupation de la cellule déterminée à la k$^{\text{ème}}$ itération, ledit module d'analyse étant **caractérisé en ce qu'**il est adapté pour déterminer ladite deuxième probabilité d'occupation de la cellule et l'ensemble de probabilité(s) de mouvement du contenu de la cellule en fonction de la première probabilité d'occupation de la cellule déterminée à la k$^{\text{ème}}$ itération par résolution de l'équation

$$P(OV|ZC) = \frac{\sum_{AO^{-1}V^{-1}} P\left(CAOO^{-1}VV^{-1}Z\right)}{\sum_{AOO^{-1}VV^{-1}} P\left(CAOO^{-1}VV^{-1}Z\right)}$$

où C : identifiant de la cellule considérée ;
A : identifiant de de la cellule qui contenait, à la (k-1)$^{\text{ème}}$ itération ce que contient la cellule considérée à la k$^{\text{ème}}$ itération ;
O : état d'occupation de la cellule considérée, parmi les états « vide » et « occupé », l'état « occupé » indiquant qu'une cellule contient un obstacle ;
O$^{-1}$ : état d'occupation de la cellule A à la (k-1)$^{\text{ème}}$ itération ;
V : vitesse de la cellule C considérée ;
V$^{-1}$ : vitesse de la cellule A à la (k-1)$^{\text{ème}}$ itération ;
Z : observations des capteurs depuis la première itération jusqu'à la k$^{\text{ème}}$ itération ;
ledit module étant adapté pour déterminer, à la k$^{\text{ème}}$ itération, la vitesse et la position respectives d'un ensemble de particules fictives dans la grille en fonction des vitesses, des positions des particules déterminées à la (k-1)$^{\text{ème}}$ itération et de la probabilité P(V|V-1) ;
ledit module étant adapté pour déterminer des particules localisées en chaque cellule en fonction des positions déterminées et pour scinder la résolution de l'équation, pour une cellule, en la résolution d'une partie statique correspondant à P(O=vide, V=0|ZC) et P(O=occupé, V=0|ZC) et en la résolution d'une partie dynamique correspondant aux P(O=occ, $V= v_i^k$ ,|ZC), i = 1 à $n^k$, où $n^k$ est le nombre de particules déterminées dans la cellule C pour la $k^{\text{ème}}$ itération ;

ledit module étant adapté pour déterminer la partie statique de la cellule C à la $k^{\text{ème}}$ itération en fonction de la partie statique de la cellule C déterminée à la $(k\text{-}1)^{\text{ème}}$ itération et de $P(O|O^{-1})$ ;

et pour déterminer la probabilité de P(O=occupé, $V= v_i^k$ ,|ZC) de la partie dynamique de la cellule C à la $k^{\text{ème}}$ itération en fonction de la probabilité P(O=occupé, $V= v_i^{k-1}$ ,|ZA) calculée à la $(k\text{-}1)^{\text{ème}}$ itération pour la partie dynamique de la cellule A et de $P(O|O^{-1})$, où la particule $p_i$ déterminée dans la cellule C à la $k^{\text{ème}}$ itération avec une vitesse $v_i^k$ se trouvait dans la cellule A à la $(k\text{-}1)^{\text{ème}}$ itération avec une vitesse $v_i^{k-1}$ .

**8.** Module d'analyse selon la revendication 7, adapté pour, à l'issue de la $k^{\text{ème}}$ itération, dupliquer ou supprimer un ou des couples ($p_i$, ( $v_i^k$ , $x_i^k$ )), où $x_i^k$ est la position de la particule $p_i$ à la $k^{\text{ème}}$ itération, au sein d'une cellule (C) de sorte que le nombre de couples par cellule soit fonction de la partie dynamique déterminée pour la cellule.

**9.** Module d'analyse selon la revendication 8, adapté pour sélectionner ledit couple à dupliquer/supprimer, en fonction de la probabilité P(O=occupé, $V= v_i^k |ZC$ ) déterminée à la $k^{\text{ème}}$ itération, où $v_i^k$ est la composante de vitesse du couple.

**10.** Module d'analyse selon la revendication 8 ou 9, selon lequel le nombre total de particules dans la grille (14) est constant au fil des itérations.

**11.** Module d'analyse selon l'une des revendications 7 à 10, adapté pour déterminer P(O=vide, V=0|ZC) à la $k^{\text{ème}}$ itération, noté $P^k$(O=vide, V=0|ZC), en fonction du produit d'un premier terme fonction de la première probabilité d'occupation et d'un deuxième terme, ledit deuxième terme étant fonction de :

-

$$P^{k\text{-}1}(O{=}occ,V{=}0|ZC).(1{-}\varepsilon) + P^{k\text{-}1}(O{=}vide,\ V{=}0|ZC)\ .\varepsilon\ ;$$

et/ou

- coeff ( $v_i^k$ ). $P^{k\text{-}1}$(O=occupé, $V= v_i^{k-1}$ ,|ZA).(1-$\varepsilon$), où coeff ( $v_i^k$ ) est une fonction décroissante de $\left\| v_i^k \right\|$ , et/ou
- une probabilité d'apparition $p_a$ d'un nouvel objet dans la scène observée.

**Patentansprüche**

**1.** Verfahren zur Analyse einer mit Hilfe eines Sensor(en)blocks (11) beobachteten dynamischen Szene zur Erkennung eines Hindernisses in der Umgebung eines Fahrzeugs, das einen Schritt der Definition eines in Zellen (C) aufgeteilten und der beobachteten Szene entsprechenden Rasters (14);

und die iterative Durchführung der Schritte durch einen Computer enthält:

- Sammeln mindestens einer neuen Beobachtung des Sensor(en)blocks bei der k-ten Iteration und Bestimmen, abhängig von der neuen gesammelten Beobachtung, einer ersten Belegungswahrscheinlichkeit jeder Zelle des Rasters, die den Betrieb des Sensor(en)blocks modelliert, wobei die erste Wahrscheinlichkeit unter Verwendung eines probabilistischen Modells des Sensor(en)blocks bestimmt wird, das ausgehend von einer Modellierung der physikalischen Merkmale des Sensor(en)blocks und der zu erkennenden Hindernisse geschätzt oder experimentell gelernt wird;

- Bestimmen, für jede Zelle, bei der k-ten Iteration, einer zweiten Belegungswahrscheinlichkeit der Zelle und einer Einheit von Bewegungswahrscheinlichkeit(en) des Inhalts der Zelle abhängig von der bei der k-ten Iteration bestimmten ersten Belegungswahrscheinlichkeit der Zelle,

wobei das Verfahren **dadurch gekennzeichnet ist, dass** die zweite Belegungswahrscheinlichkeit der Zelle und die Einheit von Bewegungswahrscheinlichkeit(en) des Inhalts der Zelle abhängig von der bei der k-ten Iteration bestimmten ersten Belegungswahrscheinlichkeit der Zelle durch Lösen der Gleichung bestimmt wird

$$P(OV|ZC) = \frac{\Sigma_{AO^{-1}V^{-1}}P(CAOO^{-1}VV^{-1}Z)}{\Sigma_{AOO^{-1}VV^{-1}}P(CAOO^{-1}VV^{-1}Z)}$$

wobei

C: Kennung der betrachteten Zelle;
A: Kennung der Zelle, die bei der (k-1)-ten Iteration enthielt, was die betrachtete Zelle bei der k-ten Iteration enthält;
O: Belegungszustand der betrachteten Zelle, unter den Zuständen "leer" und "belegt", wobei der Zustand "belegt" anzeigt, dass eine Zelle ein Hindernis enthält;
$O^{-1}$: Belegungszustand der Zelle A bei der (k-1)-ten Iteration;
$V^{-1}$: Geschwindigkeit der betrachteten Zelle C;
V': Geschwindigkeit der Zelle A bei der (k-1)-ten Iteration ;
Z : Beobachtungen der Sensoren von der ersten Iteration bis zur k-ten Iteration ;

- die Geschwindigkeit bzw. die Position einer Einheit fiktiver Teilchen im Raster werden bei der k-ten Iteration abhängig von den Geschwindigkeiten, bei der (k-1)-ten Iteration bestimmten Positionen der Teilchen und der Wahrscheinlichkeit **P(V|V** - **1)** bestimmt;
- das Verfahren enthält einen Schritt der Bestimmung der in jeder Zelle lokalisierten Teilchen abhängig von den bestimmten Positionen, und die Lösung der Gleichung, für eine Zelle, ist unterteilt in die Lösung eines statischen Teils entsprechend **P(O = leer, V = O|ZC)** und **P(O = belegt, V = O|ZC)** und in die Lösung eines dynamischen Teils entsprechend **P(O = occ, $V = v_i^k$ , |ZC),** i=1 bis $n^k$, wobei $n^k$ die Anzahl von in der Zelle C für die k-te Iteration bestimmten Teilchen ist;

wobei der statische Teil der Zelle C bei der k-ten Iteration abhängig von dem bei der (k-1)-ten Iteration bestimmten statischen Teil der Zelle C und von **P(O|O)$^{-1}$)** bestimmt wird;

wobei die Wahrscheinlichkeit von **P(O = belegt, $V = v_i^k$ , |ZC)** des dynamischen Teils der Zelle C bei der k-ten Iteration abhängig von der Wahrscheinlichkeit **P(O = belegt, $V = v_i^{k-1}$ , |ZC),** die bei der (k-1)-ten Iteration für den dynamischen Teil der Zelle A berechnet wird, und von **P(O|O$^{-1}$)** bestimmt wird, wobei das bei der k-ten Iteration in der Zelle C bestimmte Teilchen $p_i$ mit einer Geschwindigkeit $v_i^k$ sich bei der (k-1)-ten Iteration in der Zelle A mit einer Geschwindigkeit $v_i^{k-1}$ befand.

2. Verfahren nach Anspruch 1, wobei nach der k-ten Iteration ein Paar oder Paare **($p_i$,($v_i^k, x_i^k$ ))**, wobei $x_i^k$ die Position des Teilchens pi bei der k-ten Iteration ist, innerhalb einer Zelle (C) dupliziert oder gelöscht werden, so dass die Anzahl von Paaren pro Zelle von dem für die Zelle bestimmten dynamischen Teil abhängt.

3. Verfahren nach Anspruch 2, das einen Schritt der Auswahl des zu duplizierenden/zu löschenden Paars aufweist, wobei die Auswahl des Paars abhängig von der bei der k-ten Iteration bestimmten Wahrscheinlichkeit **P(O = belegt, $V = v_i^k|ZC$** ) durchgeführt wird, wobei vk die Geschwindigkeitskomponente des Paars ist.

4. Verfahren nach Anspruch 2 oder 3, wobei die Gesamtzahl von Teilchen im Raster (14) im Laufe der Iterationen konstant ist.

**5.** Verfahren nach einem der vorhergehenden Ansprüche, wobei **P(O = leer, V = 0|ZC),** bei der k-ten Iteration bestimmt und mit **P$^k$(O = leer, V = 0|ZC)** bezeichnet, abhängig vom Produkt eines ersten Terms, der von der ersten Belegungswahrscheinlichkeit abhängig ist, und eines zweiten Terms bestimmt wird, wobei der zweite Term abhängig ist von:

$$P^{k-1}(O = occ, V = 0|ZC).(1 - \varepsilon) + P^{k-1}(O = leer, V = 0|ZC).\varepsilon,$$

und/oder

- **coeff(** $v_i^k$ **). P$^{k-1}$(O = belegt,** $V = v_i^{k-1}$ **, |ZA). (1 - $\varepsilon$),** wobei **coeff(** $v_i^k$ **)** eine fallende Funktion von $\|v_i^k\|$ ist, und/oder
- einer Wahrscheinlichkeit $p_a$ des Auftretens eines neuen Objekts in der beobachteten Szene.

**6.** Computerprogramm, das in ein Analysemodul (20) einer mit Hilfe eines Sensor(en)blocks (11) beobachteten dynamischen Szene zu installieren ist, das einen Schritt der Definition eines in Zellen (C) aufgeteilten und der beobachteten Szene entsprechenden Rasters (14) enthält, wobei das Programm Anweisungen aufweist, um die Schritte eines Verfahrens nach einem der Ansprüche 1 bis 5 bei einer Ausführung des Programms durch Verarbeitungseinrichtungen des Analysemoduls durchzuführen.

**7.** Analysemodul (20) einer mit Hilfe eines Sensor(en)blocks (11) beobachteten dynamischen Szene zur Erkennung eines Hindernisses in der Umgebung eines Fahrzeugs, das einen Schritt der Definition eines in Zellen (C) aufgeteilten und der beobachteten Szene entsprechenden Rasters (14) enthält; wobei die Vorrichtung geeignet ist, um auf der Basis eines in Zellen (C) aufgeteilten und der beobachteten Szene entsprechenden Rasters (14) iterativ die Verarbeitung durchzuführen:

- Sammeln mindestens einer neuen Beobachtung des Sensor(en)blocks bei der k-ten Iteration und Bestimmen, abhängig von der neuen gesammelten Beobachtung, einer ersten Belegungswahrscheinlichkeit jeder Zelle des Rasters, die den Betrieb des Sensor(en)blocks modelliert, wobei die erste Wahrscheinlichkeit unter Verwendung eines probabilistischen Modells des Sensor(en)blocks bestimmt wird, das ausgehend von einer Modellierung der physikalischen Merkmale des Sensor(en)blocks und der zu erkennenden Hindernisse geschätzt oder experimentell gelernt wird;
- Bestimmen, für jede Zelle, bei der k-ten Iteration, einer zweiten Belegungswahrscheinlichkeit der Zelle und einer Einheit von Bewegungswahrscheinlichkeit(en) des Inhalts der Zelle abhängig von der bei der k-ten Iteration bestimmten ersten Belegungswahrscheinlichkeit der Zelle,
wobei das Analysemodul **dadurch gekennzeichnet ist, dass** es geeignet ist, um die zweite Belegungswahrscheinlichkeit der Zelle und die Einheit von Bewegungswahrscheinlichkeit(en) des Inhalts der Zelle abhängig von der bei der k-ten Iteration bestimmten ersten Belegungswahrscheinlichkeit der Zelle durch Lösen der Gleichung zu bestimmen:

$$P(OV|ZC) = \frac{\sum_{AO^{-1}V^{-1}} P(CAOO^{-1}VV^{-1}Z)}{\sum_{AOO^{-1}VV^{-1}} P(CAOO^{-1}VV^{-1}Z)}$$

wobei

C: Kennung der betrachteten Zelle;
A: Kennung der Zelle, die bei der (k-1)-ten Iteration enthielt, was die betrachtete Zelle bei der k-ten Iteration enthält;
O: Belegungszustand der betrachteten Zelle, unter den Zuständen "leer" und "belegt", wobei der Zustand "belegt" anzeigt, dass eine Zelle ein Hindernis enthält;
$O^{-1}$: Belegungszustand der Zelle A bei der (k-1)-ten Iteration;
V : Geschwindigkeit der betrachteten Zelle C;
$V^{-1}$: Geschwindigkeit der Zelle A bei der (k-1)-ten Iteration ;
Z : Beobachtungen der Sensoren von der ersten Iteration bis zur k-ten Iteration;

wobei das Modul geeignet ist, um bei der k-ten Iteration die Geschwindigkeit bzw. die Position einer Einheit fiktiver Teilchen im Raster abhängig von den Geschwindigkeiten, den bei der (k-1)-ten Iteration bestimmten Positionen der Teilchen und der Wahrscheinlichkeit **P(V|V**- 1) zu bestimmen;

wobei das Modul geeignet ist, um in jeder Zelle lokalisierte Teilchen abhängig von den bestimmten Positionen zu bestimmen, und um die Lösung der Gleichung, für eine Zelle, in die Lösung eines statischen Teils entsprechend **P(O = leer, V= O|ZC)** und **P(O = belegt, V = O|ZC)** und in die Lösung eines dynamischen Teils entsprechend **P(O = occ,** $V = v_i^k$ **, |ZC)** zu unterteilen, i=1 bis $n^k$, wobei $n^k$ die Anzahl von in der Zelle C für die k-te Iteration bestimmten Teilchen ist,

wobei das Modul geeignet ist, um den statischen Teil der Zelle C bei der k-ten Iteration abhängig vom bei der (k-1)-ten Iteration bestimmten statischen Teil der Zelle C und von **P(O|O$^{-1}$)** zu bestimmen;

und um die Wahrscheinlichkeit von **P(O = belegt,** $V = v_i^k$ **, |ZC)** des bei der k-ten Iteration bestimmten dynamischen Teils der Zelle C abhängig von der Wahrscheinlichkeit **P(O = belegt,** $V = v_i^{k-1}$ **, |ZC),** die bei der (k-1)-ten Iteration für den dynamischen Teil der Zelle A berechnet wird, und von **P(O|O)$^{-1}$)** zu bestimmen, wobei das bei der k-ten Iteration in der Zelle C bestimmte Teilchen $p_i$ mit einer Geschwindigkeit

**vk** sich bei der (k-1)-ten Iteration in der Zelle A mit einer Geschwindigkeit $v_i^{k-1}$ befand.

8. Analysemodul nach Anspruch 7, das geeignet ist, um nach der k-ten Iteration ein Paar oder Paare **($p_i$,(** $v_i^k$, $x_i^k$ **)),** wobei **xk** die Position des Teilchens pi bei der k-ten Iteration ist, innerhalb einer Zelle (C) zu duplizieren oder zu löschen, so dass die Anzahl von Paaren pro Zelle von dem für die Zelle bestimmten dynamischen Teil abhängt.

9. Analysemodul nach Anspruch 8, das geeignet ist, um das zu duplizierende/zu löschende Paar abhängig von der bei der k-ten Iteration bestimmten Wahrscheinlichkeit **P(O = belegt,** $V = v_i^k \big| ZC$ ) auszuwählen, wobei vk die Geschwindigkeitskomponente des Paars ist.

10. Analysemodul nach Anspruch 8 oder 9, wobei die Gesamtzahl von Teilchen im Raster (14) im Laufe der Iterationen konstant ist.

11. Analysemodul nach einem der Ansprüche 7 bis 10, das geeignet ist, um **P(O = leer,V = 0|ZC)** bei der k-ten Iteration, bezeichnet mit **P$^k$(O = leer, V = 0|ZC),** abhängig vom Produkt eines ersten Terms abhängig von der ersten Belegungswahrscheinlichkeit und eines zweiten Terms zu bestimmen, wobei der zweite Term abhängt von:

-

$$P^{k-1}(O = occ, V = 0|ZC).(1 - \varepsilon) + P^{k-1}(O = leer, V = 0|ZC).\varepsilon,$$

und/oder

- **coeff(** $v_i^{k`}$ ). **P$^{k-1}$(O = belegt,** $V = v_i^{k-1}$, **|ZA). (1 - ε),** wobei **coeff(** $v_i^k$ ) eine fallende Funktion von $\big\| v_i^k \big\|$ ist, und/oder

- einer Wahrscheinlichkeit $p_a$ des Auftretens eines neuen Objekts in der beobachteten Szene.

**Claims**

1. A method for analysing a dynamic scene observed using a block (11) of sensor(s) for the detection of an obstacle in the environment of a vehicle comprising a step of defining a grid (14) partitioned into cells (C) and corresponding to the observed scene;

and the iterative implementation by computer by steps of

- collecting at least one new observation of the block of sensor(s) at the kth iteration and determining, according to the collected new observation, a first probability of occupancy of each cell of the grid modelling the operation of the block of sensor(s), said first probability being determined using a probabilistic model of the block of sensor (s) estimated based on a modelling of the physical characteristics of the block of sensor (s) and of the obstacles to be detected, or learnt experimentally;

- determining, for each cell, at the $k^{th}$ iteration, a second probability of occupancy of the cell and a set of probabilities of movement of the content of the cell according to the first probability of occupancy of the cell determined at the $k^{th}$ iteration,

said method being **characterised in that** the second probability of occupancy of the cell and of the set of probabilities of movement of the content of the cell according to the first probability of occupancy of the cell determined at the $k^{th}$ iteration is determined by solving the equation:

$$P(OV|ZC) = \frac{\sum_{AO^{-1}V^{-1}} P(CAOO^{-1}VV^{-1}Z)}{\sum_{AOO^{-1}VV^{-1}} P(CAOO^{-1}VV^{-1}Z)}$$

where C: an identifier of the considered cell;
A: identifier of the cell which contained, at the $(k-1)^{th}$ iteration, the content of the considered cell at the $k^{th}$ iteration;
O: state of occupancy of the considered cell, from among the "empty" and "occupied" states, the "occupied" state indicating that a cell contains an obstacle;
$O^{-1}$: state of occupancy of the cell at the $(k-1)^{th}$ iteration;
V: velocity of the considered cell;
$V^{-1}$: velocity of the cell at the $(k-1)^{th}$ iteration;
Z: observations of the sensors since the first iteration until the $k^{th}$ iteration;

- the respective velocity and position of a set of dummy particles in the grid are determined at the $k^{th}$ iteration according to the velocities, positions of the particles determined at the $(k-1)^{th}$ iteration and the probability P(V|V-1);
- the method comprises a step of determining the particles located in each cell according to the determined positions and **in that** solving the equation, for a given cell, is split into solving a static part corresponding to **P(O = empty, V = 0|ZC)** and **P(O = occupied, V = 0|ZC)** and into solving a dynamic part corresponding to the **P(O =occ,** $V = v_i^k$ **, |ZC),** i = 1 to $n^k$, where $n^k$ is the number of particles determined in the cell C for the $k^{th}$ iteration;

the static part of the cell C at the $k^{th}$ iteration being determined according to the static part of the cell C determined at the $(k-1)^{th}$ iteration and **P = (O|O⁻¹);**

the probability of **P(O = occupied, V** $V = v_i^k$ **, |ZC)** of the dynamic part of the cell C being determined at the $k^{th}$ iteration according to the probability **P(O = occupied,** $V = v_i^{k-1}$ **, |ZA)** calculated at the $(k-1)$ $^{th}$ iteration for the dynamic part of the cell A and of **P = (O|O⁻¹),** where the particle **p_i** determined in the cell C at the $k^{th}$ iteration with a velocity $v_i^k$ was located in the cell A at the $(k-1)^{th}$ iteration with a velocity $v_i^{k-1}$.

2. The method according to claim 1, according to which, upon completion of the $k^{th}$ iteration, one or more pair (s) **(p_i,(** $v_i^k$, $x_i^k$ **)),** where **xk** is the position of the particle **p_i** at the $k^{th}$ iteration, are duplicated within a cell (C) or deleted so that the number of pairs per cell depends on the dynamic part determined for the cell.

3. The method according to claim 2, including a step of selecting the pair to be duplicated/deleted, the selection of said pair being carried out according to the probability **P(O = occupied,** $V = v_i^k | ZC$ **)** determined at the $k^{th}$ iteration, where **vf** is the velocity component of the pair.

4. The method according to claim 2 or 3, according to which the total number of particles in the grid (14) is constant throughout the iterations.

5. The method according to one of the preceding claims, according to which $P(O = empty, V = 0|ZC)$, determined at the $k^{th}$ iteration and denoted $P^k(O = empty, V = 0|ZC)$, is determined according to the product of a first term dependent on the first probability of occupancy and of a second term, said second term being dependent on:

-

$$P^{k-1}(O = occ, V = 0|ZC).(1 - \varepsilon) + P^{k-1}(O = empty, V = 0|ZC).\varepsilon \,,$$

and/or

- **coeff**( $v_i^k$ ). **P^{k-1}**(*O = occupied*, $V = v_i^{k-1}$ , |*ZA*). **(1 - ε)**, where **coeff**( $v_i^k$ ) is a decreasing function of $\|v_i^k\|$ , and/or

- a probability of apparition $p_a$ of a new object in the observed scene.

6. A computer program to be installed in a module (20) for analysing a dynamic scene observed using a block (11) of sensor(s) comprising a step of defining a grid (14) partitioned into cells (C) and corresponding to the observed scene, said program including instructions for implementing the steps of a method according to one of claims 1 to 5 when executing the program by processing means of the analysis module.

7. A module (20) for analysing a dynamic scene observed using a block (11) of sensor(s) for the detection of an obstacle in the environment of a vehicle comprising a step of defining a grid (14) partitioned into cells (C) and corresponding to the observed scene; said device being adapted, based on a grid (14) partitioned into cells (C) and corresponding to the observed scene, to iteratively implement the process of:

- collecting at least one new observation of the block of sensor(s) at the $k^{th}$ iteration and determining, according to the collected new observation, a first probability of occupancy of each cell of the grid modelling the operation of the block of sensor(s), said first probability being determined using a probabilistic model of the block of sensor (s) estimated based on a modelling of the physical characteristics of the block of sensor (s) and of the obstacles to be detected, or learnt experimentally;
- determining, for each cell, at the $k^{th}$ iteration, a second probability of occupancy of the cell and a set of probabilities of movement of the content of the cell according to the first probability of occupancy of the cell determined at the $k^{th}$ iteration, said analysis module being **characterised in that** it is adapted to determine said second probability of occupancy of the cell and of the set of probabilities of movement of the content of the cell according to the first probability of occupancy of the cell determined at the $k^{th}$ iteration by solving the equation:

$$P(OV|ZC) = \frac{\sum_{AO^{-1}V^{-1}} P(CAOO^{-1}VV^{-1}Z)}{\sum_{AOO^{-1}VV^{-1}} P(CAOO^{-1}VV^{-1}Z)}$$

where C: an identifier of the considered cell;
A: identifier of the cell which contained, at the $(k-1)^{th}$ iteration, the content of the considered cell at the $k^{th}$ iteration;
O: state of occupancy of the considered cell, from among the "empty" and "occupied" states, the "occupied" state indicating that a cell contains an obstacle;
$O^{-1}$: state of occupancy of the cell at the $(k-1)^{th}$ iteration;
V: velocity of the considered cell;
$V^{-1}$: velocity of the cell at the $(k-1)^{th}$ iteration;
Z: observations of the sensors since the first iteration until the $k^{th}$ iteration;
said module being adapted to determine, at the $k^{th}$ iteration, the respective velocity and position of a set of dummy particles in the grid according to the velocities, positions of the particles determined at the $(k-1)^{th}$ iteration and the probability P(V|V-1);
said module being adapted to determine particles located in each cell according to the determined positions and to split solving of the equation, for a given cell, into solving a static part corresponding to *P(O = empty, V = 0|ZC)* and *P(O = occupied, V = 0|ZC)* and into solving a dynamic part corresponding to the *P(O = occ,*

*V =* $v_i^k$ *, |ZC),* i = 1 to n^k, where n^k is the number of particles determined in the cell C for the $k^{th}$ iteration;

said module being adapted to determine the static part of the cell C at the $k^{th}$ iteration according to the static part of the cell C determined at the $(k-1)^{th}$ iteration and **P = (O|O⁻¹)**;

and to determine the probability of **P(O = occupied,** $V = v_i^k$ **, |ZC)** of the dynamic part of the cell C at the $k^{th}$ iteration according to the probability **P(O = occupied,** $V = v_i^{k-1}$ **, |ZA)** calculated at the $(k-1)^{th}$ iteration for the dynamic part of the cell A and of **P = (O|O⁻¹)**, where the particle **p_i** determined in the cell C at the $k^{th}$ iteration with a velocity **vk** was located in the cell A at the $(k-1)^{th}$ iteration with a velocity $v_i^{k-1}$ .

8. The analysis module according to claim 7, adapted, upon completion of the $k^{th}$ iteration, to duplicate or delete one or more pair (s) **(p_i,(** $v_i^{k}$ **,** $x_i^{k}$ **))**, where **xk** is the position of the particle **p_i** at the $k^{th}$ iteration, within a cell (C) so that the number of pairs per cell depends on the dynamic part determined for the cell.

9. The analysis module according to claim 8, adapted to select said pair to be duplicated/deleted, according to the probability **P(O = occupied,** $V = v_i^k | ZC$ **)** determined at the $k^{th}$ iteration, where $v_i^{k}$ is the velocity component of the pair.

10. The analysis module according to claim 8 or 9, according to which the total number of particles in the grid (14) is constant throughout the iterations.

11. The analysis module according to one of claims 7 to 10, adapted to determine **P(O = empty, V = 0|ZC),** at the $k^{th}$ iteration, denoted **P^k(O = empty, V = 0|ZC),** according to the product of a first term dependent on the first probability of occupancy and of a second term, said second term being dependent on:

-

$$P^{k-1}(O = occ, V = 0 | ZC).(1 - \varepsilon) + P^{k-1}(O = empty, V = 0 | ZC).\varepsilon ,$$

and/or

- **coeff(** $v_i^{k}$ **).** **P^k-1(O = occupied,** $V = v_i^{k-1}$ **, |ZA). (1 - ε),** where **coeff(** $v_i^{k}$ **)** is a decreasing function of $\left\| v_i^k \right\|$ , and/or
- a probability of apparition $p_a$ of a new object in the observed scene.

FIG.1

FIG.2

FIG.3

FIG.4

FIG.5

**EP 3 152 675 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 0552736

### Littérature non-brevet citée dans la description

- Bayesian Occupancy grid Filter for dynamic environments using prior map knowledge. **DE GINDELE T et al.** INTELLIGENT VEHICLES SYMPOSIUM, 2009. IEEE, 03 Juin 2009, 669-676
- Using fast classification of static and dynamic environment for improving Bayesian occupancy filter(BOF) and tracking. **QADEER BAIG et al.** CONTROL AUTOMATION ROBOTICS&VISION (ICARV). 2012, 12th International conférence on. IEEE, 05 Décembre 2012, 656-661

- **PIERRE BESSIÈRE ; EMMANUEL MAZER ; JUAN MANUEL AHUACTZIN-LARIOS ; KAMEL MEKHNACHA.** Bayesian Programming. CRC Press, Décembre 2013
- **MK TAY ; KAMEL MEKHNACHA ; CHENG CHEN ; MANUEL YGUEL.** An efficient formulation of the bayesian occupation filter for target tracking in dynamic environments. *International Journal of Vehicle Autonomous Systems,* 2008, vol. 6 (1), 155